# EUROPEAN PATENT APPLICATION

(11) **EP 3 521 900 A1**
(43) Date of publication of application: **07.08.2019**
(21) Application number: 17808743.3
(22) Date of filing: 11.07.2017
(51) Int. Cl.: G02B 27/02, H04N 5/64

(54) **HEAD-MOUNTED DISPLAY**

(30) Priority: 29.09.2016 JP 2016191286
(71) Applicant: Brother Kogyo Kabushiki Kaisha, Nagoya-shi, Aichi 467-8561 (JP)
(72) Inventor: KUSUDA Miyuki, Nagoya-shi Aichi 467-8561 (JP)
(74) Representative: J A Kemp
(86) International application number: PCT/JP2017/025244
(87) International publication number: WO 2018/061402

(57) **Abstract**

The present disclosures provide a head-mounted display capable of preventing variation of an eye point in association with focus adjustment and enabling to easily adjust focus at an arbitrary position. The head-mounted display includes a casing 21, a generation part 32 movably held inside the casing 21 and configured to generate image light, an optical part 4 unmovably held inside the casing 21 and having lenses 42 allowing the image light generated by the generation part 32 to pass therethrough, a displacement mechanism 35 configured to move the generation part 32 inside the casing 21, a first operation part 26A connected to the displacement mechanism 35 and operating to move the generation part 32 along a direction parallel to an optical axis of the image light, and a restricting part 5 configured to restrict a movable range of the generation part 32.

## Description

### TECHNICAL FIELD

The present disclosures relate to a head-mounted display.

### BACKGROUND ART

Various mechanisms for a focus adjustment in a head-mounted display (hereinafter, referred to as an HMD) have been suggested. Patent Document 1 discloses a digital camera having an automatic focusing (hereinafter, referred to as AF) function, and a manual focusing (hereinafter, referred to as MF) function. The digital camera is provided with a focus ring (hereinafter, referred to as an "MFR") for moving a lens unit with respect to a CCD. The user adjusts the focus at a position between a near end and a far end by operating the MFR. Further, the digital camera corrects the focus with the AF function after the focus adjustment with the MFR. The digital camera has a switch to switch searching ranges of the AF for the correction of the focus. The switch switches searching ranges among all range (e.g., from the near end to the far end), 1/3 of the all range, and 2/3 of the all range.

### PRIOR ART DOCUMENT

### PATENT DOCUMENTS

[Patent Document 1] Japanese Patent Provisional Publication No. 2007-108217

### SUMMARY OF THE INVENTION

### PROBLEM TO BE SOLVED

A case where a manual focus adjustment is realized by applying the mechanism of the above-mentioned digital camera to an HMD to provide an operation part to move a lens unit with respect to a generation part for generating image light will be described. In the HMD, an eye point changes in accordance with movement of the lens unit. Therefore, there is a problem that there are cases where a wearing position of the HMD at which an entire image based on the image light output by the HMD can be viewed changes depending on the focus adjustment. Further, for example, when the HMD is configured to perform the focus adjustment for a wide range from a close distance (e.g., approximately 30 cm) to a far distance (e.g., infinite distance), if the user performs the focus adjustment manually, there is a case where adjusting the focus at an arbitrary position is difficult since, for example, the operation part may be moved more than necessary.

An object of the present disclosures is to provide a head-mounted display capable of preventing variation of the eye point in association with the focus adjustment and enabling to easily adjust the focus at an arbitrary position.

### MEANS FOR SOLVING THE PROBLEM

A head-mounted display according to the present disclosures includes a casing, a generation part movably held inside the casing and configured to generate image light, an optical part unmovably held inside the casing and having an optical element allowing the image light generated by the generation part to pass therethrough, a displacement mechanism configured to move the generation part inside the casing, a first operation part connected to the displacement mechanism and operating to move the generation part along a first direction parallel to an optical axis of the image light, and a restricting part configured to restrict a movable range of the generation part.

In the head-mounted display, focus adjustment can be performed by moving the generation part with respect to the optical part. Further, in the head-mounted display, by restricting the movable range of the generation part with the restricting part and performing the focus adjustment with the first operation part, the generation part can easily be moved in accordance with a focal distance. It is noted that a position of the optical part with respect to the casing is unchanged even when the focus adjustment is performed. Therefore, an eye point of the head-mounted display is unchanged even when the focus adjustment is performed. As above, the head-mounted display facilitates the focus adjustment by the restricting part and suppresses displacement of the eye point due to the focus adjustment.

According to the present disclosures, the restricting part may be capable of switching between a case where the movable range is restricted within a first range and a case where the movable range is restricted within a second range. A position of an end of the first range on the optical part side may be closer to the optical part than a position of an end of the second range on the optical part side. In the first direction, a length of the first range may be longer than a length of the second range. In this case, the generation part which moves within the first range is closer to the optical part than the generation part which moves within the second range. In this case, a focal distance variation due to a slight movement of the generation part is greater in the case where the generation part moves within the second range than in the case where the generation part moves within the first range. As a countermeasure against the above, in the head-mounted display, in the first direction, a length of the second range is shorter than a length of first range. Therefore, when the movement of the generation part is restricted within the second range, a movable length of the generation part is made relatively shorter. Accordingly, even when the focal length varies largely by the slight movement of the generation part (that is, when the generation part moves within the second range), the user can perform the operation of the focus easily.

According to the present disclosures, the restricting part may include a groove provided to one of the generation part and the casing and extending in a direction parallel to the first direction, the groove including a first groove configured to restrict the movable range within the first range, a second groove configured to restrict the movable range within the second range, and a connecting groove connecting the first groove and the second groove, and a protruding section provided to the other of the generation part and the casing, the protruding section protruding toward the generation part, a part of the protruding section being insertable in the groove. When the protruding section is inserted in the first groove, the movable range may be restricted within the first range as the protruding section relatively moves along the first grove, and when the protruding section is inserted in the second groove, the movable range may be restricted within the second range as the protruding section relatively moves along the second groove. In this case, in the head-mounted display, the generation part 32 can be moved in the first direction by relatively moving the protruding section along the groove. Further, the head-mounted display further includes the connecting groove connecting the first groove and the second groove. Due to this configuration, a state of the head-mounted display can be easily switched between the state where the movement of the generation part is restricted within the first range (hereinafter, referred to as for example, a "fist state") and the state where the movement of the generation part is restricted within the second range (hereinafter referred to as, for example, a "second state") by causing the protruding sectionto pass through the connecting groove.

According to the present disclosures, the first groove, the second grove and the connecting groove are provided at different positions in a direction perpendicular to the first direction. A position of an end of the first groove on the optical part side may be closer to the optical part than an end of the second groove opposite to the optical part side, and the connecting groove may extend, in a direction parallel to the first direction, over an end of the first groove opposite to the optical part side and an end of the second groove on the optical part side, the connecting groove being arranged between the first groove and the second groove in the direction perpendicular to the first direction. In this case, at a portion of the first state and a portion of the second state, the movable ranges of generation part are continuous in the first direction (e.g., fornt-rear direction). Therefore, by switching between the first state and the second state, the user can perform the focus adjustment by moving the generation part seamlessly over the first range and the second range. Further, in the head-mounted display, the generation part can be moved in the first direction within the third range including the first range and the second range by relatively moving the protruding section along the connecting groove. Further, in the head-mounted display, while switching from the first state to the second state, the state can be switched to a state where the generation part can move within the third range (hereinafter referred to as, for example, a "third state"). Therefore, for example, when the user performs an operation to switch from the first state to the second state, even if the user mistakenly switched to the third state, the generation part is at least movable within the second range, thereby preventing the user having a feeling of strangeness.

According to the present disclosures, the first groove and the second groove may be aligned in the first direction, and the connecting groove may be configured to connect an end of the first groove on the optical part side and an end of the second groove on a side opposite to the optical part side. In this case, the user can continuously switch among the first state and the second state intuitively and easily by performing the operation to relatively move the protruding section with respect to the groove in the first direction.

According to the present disclosures, restraining parts configure to restrain movement of the protruding section may be provided at connection portions between the first groove and the connecting groove, and between the second groove and the connecting groove. In this case, in the head-mounted distpay, movement of the protruding section in the first direction, at a boundary between the first groove and the connecting groove and at a boundary between the connecting groove and the second groove, can be restrained by the restraining part.

According to the present disclosures, the head-mounted display may further include a second operation part configured to operate the protruding section, and the first operation part and the second operation part may be arranged to align in a direction perpendicular to the first direction. There is a case where the head-mounted display is worn in front of an eye of the user in a state where the first direction is oriented in the front-rear direction or in the left-right direction. In either case, the head-mounted display can be brought to a state where the first operation part is held on the front wall part of the casing, and the second operation part is held on the upper wall part of the casing. In this case, the user can operate the second operation part with a forefinger or a middle finger while operating the first operation part with an annular finger at the same time, with gripping the casing with the other fingers from above and below.

According to the present disclosures, the first operation part may include a rotatable dial. In case of a small-sized head-mounted display, the movable range of the generation part becomes short. As a countermeasure against the above, by using the rotatable dial as the first operation part, rotation of the operation part can be converted to a movement in the first direction and transmitted to the generation part (by a transfer mechanism such as a cam). Therefore, fine adjustment becomes possible as compared to a case where a sliding type operation part which directly transmits a user operation on the operation part to the generation part is used as the first operation part. Therefore, the user can perform the focus adjustment finely.

According to the present disclosures, the head-mounted display may further be provided with a mode changing means configured to make the dial rotate in a first mode when the generation part moves within the second rage, and in a second mode which is different from the first mode when the generation part moves within the first range. In this case, the user can easily recognize in which of the ranges the user is moving the generation part by confirming differences in the rotating modes of the dial between when the generation part is moved in the first range and when the generation part is moved in the second range.

### BRIEF DESCRIPTION OF THE DRAWINGS

Fig. 1 is a perspective view of an HMD 1.
Fig. 2 is a perspective view of a display device 2A.
Fig. 3 is an exploded perspective view of the display device 2A.
Fig. 4 is a perspective view of a generation mechanism 3.
Fig. 5 is a cross-sectional view of the display device 2A.
Fig. 6 is a perspective view of the generation mechanism 3, an optical part 4, a first operation part 26A and a second operation part 27A.
Fig. 7 schematically shows a positional relationship between the generation part 32 and the optical part 4.
Fig. 8 is a perspective view of a display device 2B.
Fig. 9 is a cross-sectional view of the display device 2B.
Fig. 10 schematically shows a positional relationship between the generation part 32 and the optical part 4.

### DESCRIPTION OF THE EMBODIMENTS

### < First Embodiment >

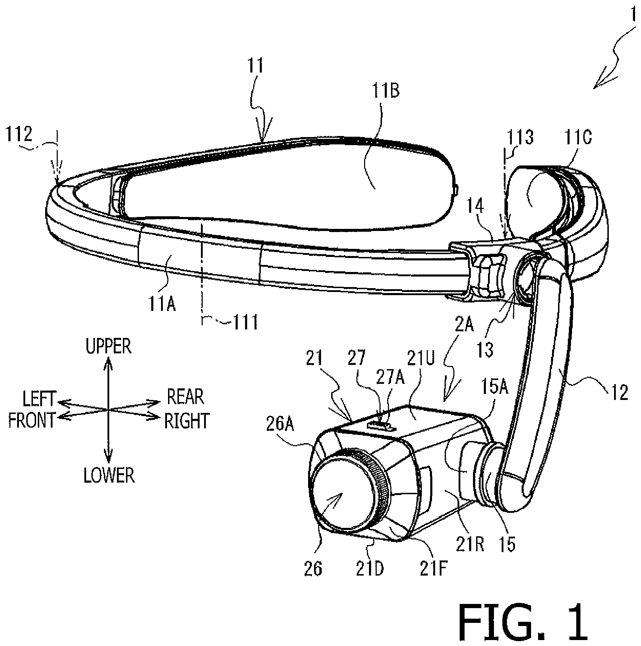

A first embodiment according to the present disclosures will be described. As shown Fig. 1, a head-mounted display (hereinafter, referred to as an "HMD") 1 is a video transmission type HMD. The HMD 1 has a mounting fixture 11, a connection fixture 12 and a display device 2A. hereinafter, in order to facilitate understanding the description of the drawings, an upper side, a lower side, a left side, a right side, a front side and a rear side of the HMD 1 will be defined. The upper side, the lower side, the left side, the right side, the front side and the rear side of the HMD 1 correspond, for example, to an upper side, a lower side, a diagonally upper left side, a diagonally lower right side, a diagonally lower left side and a diagonally upper right side, respectively. The upper side, the lower side, the left side, the right side, the front side and the rear side of the HMD 1 correspond to an upper side, a lower side, a right side, a left side, a front side and a rear side of the user who wears the mounting fixture 11, respectively.

### < Mounting Fixture 11 and Connection Fixture 12 >

As shown in Fig. 1, the mounting fixture 11 is configured with flexible material such as resin or metal (e.g., stainless steel). The mounting fixture 11 has a first section 11A and second sections 11B and 11C. In the following description, in order to facilitate understanding, the mounting fixture 11 will be described by dividing the same into the first section 11A and the second sections 11B and 11C. However, the mounting section 11 is not separated into the first section 11A and the second sections 11B and 11C, but is an integral member as a whole.

Each of the first section 11A and the second sections 11B and 11C is a curved and elongated plate-shaped member. The first section 11A is a part of the mounting fixture 11 extending in the right-left direction between a position 112 and a position 113. The first section 11A convexly curved forward. The position 112 is located on the left side with respect to the center 111 of the mounting fixture 11 in the right-left direction. The position 113 is located on the right side with respect to the center 111 of the mounting fixture 11 in the right-left direction. The second section 11B is a part of the mounting fixture 11 extending rearward from the position 112. The second section 11C is a part of the mounting fixture 11 extending rearward from the position 113. The second sections 11B and 11C extend in a direction where rear ends thereof approach each other. The mounting fixture 11 is worn on the head of the user in a state where the first section 11A and the second sections 11B and 11C contact a frontal region, a right temporal region and a left temporal region of the user, respectively.

The connection fixture 12 is a substantially rod-like member. The connection fixture 12 is configured with resin or metal. The connection fixture 12 extends in the up-down direction in the front view. An upper end of the connection section 12 is connected to the mounting fixture 11 through a ball joint 13 and a connection member 14. A lower end of the connection fixture 12 is connected to the display device 2A through a ball joint 15. In a state where the mounting fixture 11 is worn on the head of the user, the connection fixture 12 allows the display device 2A to be located in front of a left eye of the user.

### < Display Device 2A >

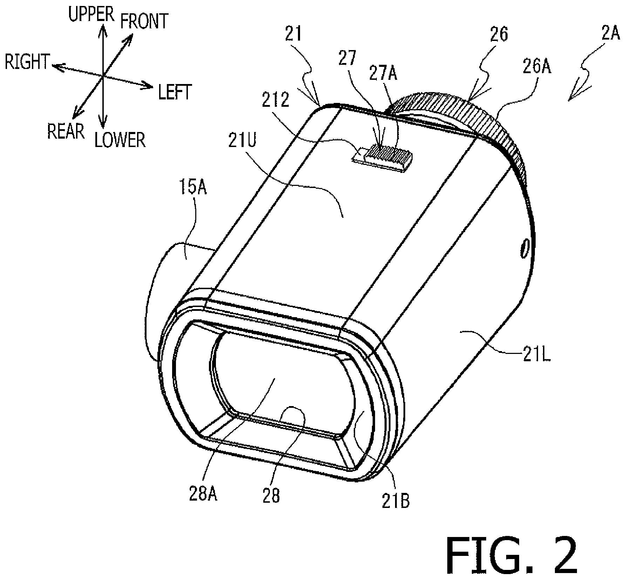

As shown in Figs. 1 and 2, the display device 2A has a casing 21. The casing 12 has an approximately rectangular parallelepiped shape extending in the front-rear direction. On a right wall part 21R of the casing 21, an accommodation section 15A configured to receive a sphere section (not shown) of a ball stud of the ball joint 15 is connected. On a front wall part 21F of the casing 21, a first operation part 26A of a first operation mechanism 26 is provided. The first operation part 26A is a dial rotatable about an axis extending in the front-rear direction. As will be described in detail later, it is noted that the first operation part 26A is used when the user performs the focus adjustment. On an upper wall part 21U of the casing 21, a second operation part 27A of a second operation mechanism 27 is provided. The second operation part 27A is a knob movable in the right-left direction. As will be described in detail later, the second operation part 27A is used to switch adjustment ranges of the focus adjustment with the first operation part 26A. The second operation part 27A is arranged on an upper side with respect to the first operation part 26A in the up-down direction, the first operation part 26A and the second operation part 27A are arranged to be aligned in the up-down direction.

As shown in Fig. 2, an opening 28 is formed on a rear wall part 21B of the casing 21. The opening 28 allows the image light generated by a generation part 32, which will be described later, to pass therethrough from an inner side of the casing 21 to outside. The user visually recognizes an image based on the image light emitted from the opening 28. The opening 28 is covered with a transparent member 28A which is a transparent plate-shaped member. The transparent member 28A prevents entering of water and/or dust inside the casing through the opening 28.

### < Casing 21 >

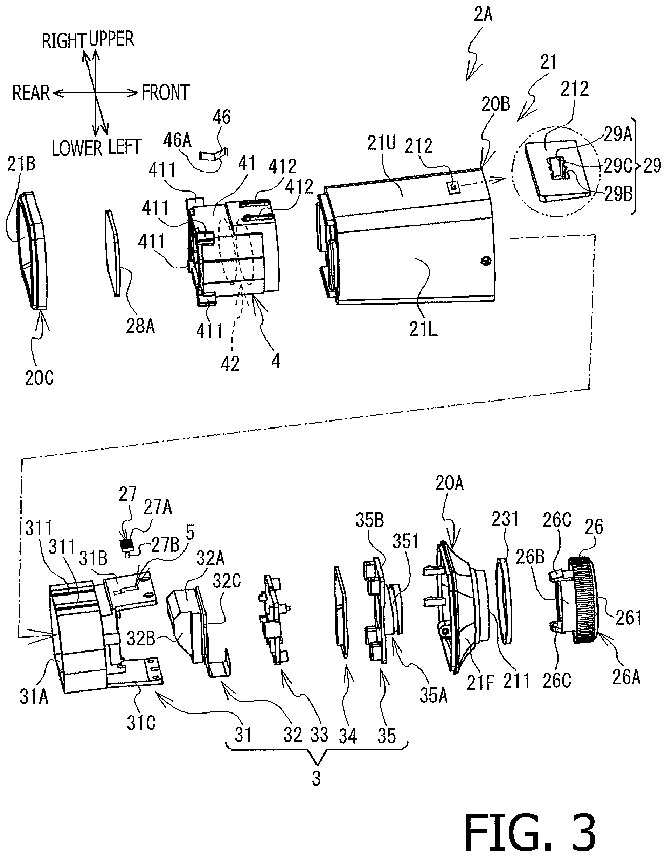

As shown in Fig. 3, the casing 21 is formed as a first section 20A, a second section 20B and a third section 20C are combined. The second section 20B configures the upper wall part 21U, the right wall part 21R (see Fig. 1), a left wall part 21L and a lower wall part 21D (see Fig. 1) of the casing 21. The second section 20B has a shape of an angular cylinder of which a front end and a rear end are opened. The first section 20A configures the front wall 21F of the casing 21. The first section 20A is fitted in the front end of the second section 20B. The third section 20C configures the rear wall part 21B of the casing 21. The third section 20C is fitted on the rear end of the second section 20B. Inside the casing 21 covered with the first section 20A, the second section 20B and the third section 20C, a generation mechanism 3 and an optical part 4, which will be described later, are accommodated.

The front wall part 21F of the first section 20A is inclined frontward, from an outer frame part, to the center. At the center of the front wall part 21F, a through hole 211 is formed. The through hole 211 has a circular shape. The through hole 211 rotatably supports the first operation mechanism 26 which will be described later.

On an upper wall part 21U of the second section 20B, a protruding part 212 is provided. The protruding part 212 has a rectangular shape elongated in the right-left direction in the top view. On an upper surface of the protruding part 212, a through hole 29 is formed. The through hole 29 includes through holes 29A, 29B and 29C which are substantially circular holes and connected at contiguous portions thereof. The through holes 29A, 29C and 29B are aligned linearly in the right-left direction. The through hole 29A is arranged as the rightmost through hole, while the through hole 29B is arranged as the leftmost through holes. The through hole 29C is arranged on the left side of the through hole 29A and on the right side of the through hole 29B. The left end of the through hole 29A is connected with the right end of the through hole 29C. The right end of the through hole 29B is connected with the left end of the through hole 29C. The through holes 29 movably support the second operation mechanism 27, which will be described later, in the right-left direction.

On the front side with respect to the opening 28 (see Fig. 2) provided to the rear wall part 21B of the third section 20C, a transparent member 28A is arranged. The image light generated by the generation part 32, which will be described later, passes through the transparent member 28A, and is emitted from inside of the casing 21 to outside through the opening 28.

### < Generation Mechanism 3 >

The generation mechanism 3 generates the image light of an image corresponding to an image signal received from a not-shown external device through a not-shown communication line. The generation mechanism 3 moves in the front-rear direction in response to operation made on the first operation part 26A, and moves the focused point of the image light passed through the optical part 4, which will be described later. A movable range of the generation mechanism 3 when moving in the front-rear direction is switched in accordance with an operation made on the second operation part 27A. The generation mechanism 3 has holding members 31 and 33, a generation part 32, a control substrate 34 and a displacement mechanism 35.

The holding member 31 holds the generation part 32, a holding member 33, the control substrate 34 and the displacement mechanism 35, which will be described later. The holding member 31 has a polygonal tube section 31A, and side plate sections 31B and 31C. The polygonal tube section 31A is a member having a substantially polygonal tube shape extending in the front-rear direction. The side plate section 31B extends frontward from a front end of an upper wall part of the polygonal tube section 31A. The side plate section 31C extends frontward from a front end of a lower wall part of the polygonal tube section 31A. The side plate sections 31B and 31C are planar plate-shaped members. Each plane of the side plate sections 31B and 31C is directed in the up-down direction. The side plate sections 31B and 31C are spaced from each other in the up-down direction, and face each other. A restricting part 5 is formed to the side plate section 31B. The restricting part 5 will be described in detail later.

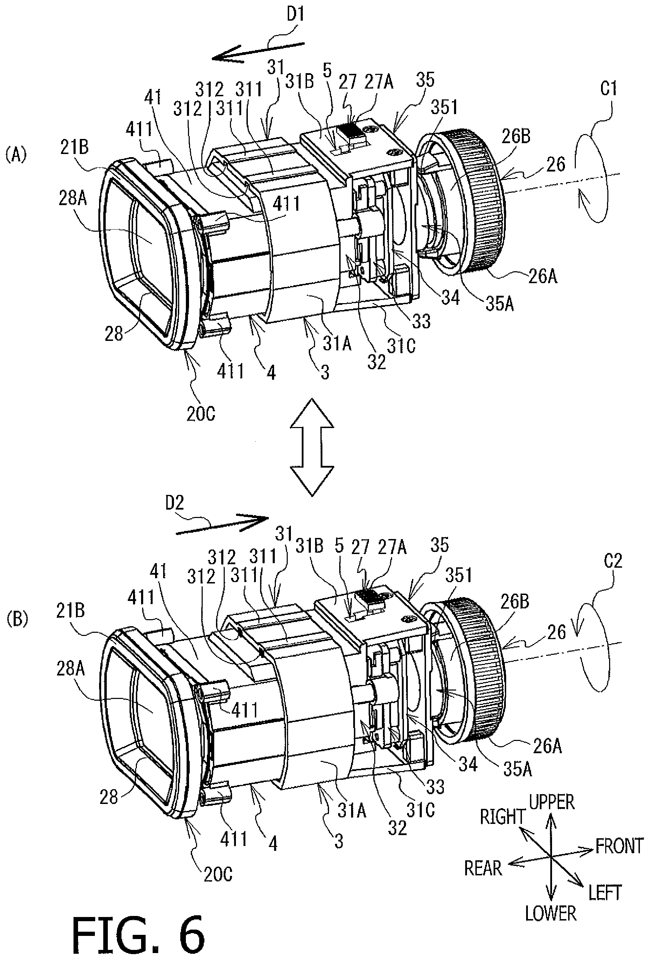

On an outer surface of the upper wall part of the polygonal tube section 31A, two protruding parts 311 extending in the front-rear direction are formed. The two protruding parts 311 are spaced in the right-left direction and extend in parallel. On an inner surface of the polygonal tube section 31A, at portions respectively corresponding to the two protruding parts 311, two recesses 312 extending in the front-rear direction (see Fig. 6) are formed. The two protruding parts 311 and the two recesses 312 are formed as parts of the polygonal tube section 31A are bent outward. Although not shown, on an outer surface of the lower wall part of the polygonal tube section 31A, two protruding parts having the same shapes as the two protruding parts 311 are formed. Further, on an inner surface of the lower wall part of the polygonal tube section 31A, two recesses having the same shapes as the two recesses 312 are formed.

The generation part 32 is a liquid crystal unit. The generation part 32 is arranged inside the polygonal tube section 31A of the holding member 31. The generating part 32 has a light source 32A, a light guide member 32B and a display element 32C. The display element 32C has a rectangular shape. A display method employed in the display element 32C is of a reflection type. A display surface of the display element 32C corresponds to a rear surface of the display element 32C. The light guide member 32B is fixed on the display surface of the display element 32C. The light guide member 32B efficiently reflects light, which is incident from the above, frontward, and allows light, which is incident from the front side, to efficiently pass through rearward. The light guide member 32B is, for example, a polarizing beam splitter allowing one of two polarized light components perpendicularly intersecting with each other to pass therethrough, while reflecting the other of the two polarized light components. The light source 32A is connected to an upper surface of the light guide member 32B.

In the generation part 32, light emitted from the light source 32A passes through a not shown diffusion plate and diffused to be light evenly disturbed within a plane. Further, the light passed through the diffusion plate passes through a not-shown polarizing plate and is linearly polarized. The light passed through the polarizing plate is reflected by the light guide member 32B toward the display element 32C and is incident on the display element 32C. The light incident on the display element 32C is reflected by the display surface of the display element 32C. The reflected light corresponds to the image light of the image displayed on the display surface of the display element 32C. It is noted that a polarization direction of the image light rotates in association with reflection on the display surface. The image light emitted from the display element 32C is incident on the light guide member 32B from the front side, and is emitted toward the rear side. The optical axis of the image light extends in the front-rear direction.

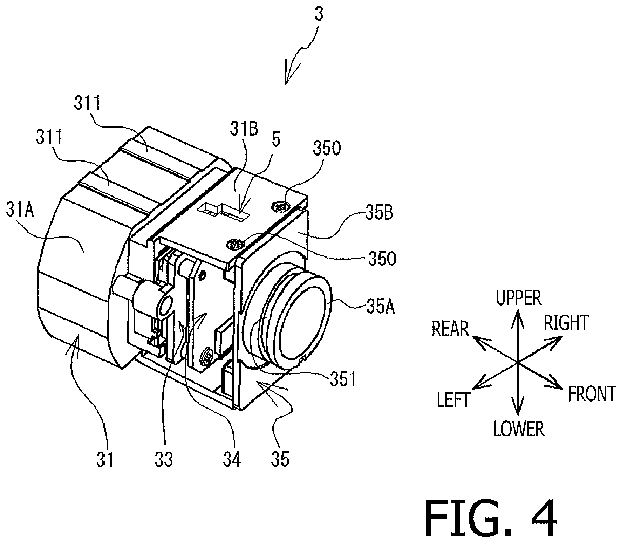

The holding member 33 and the control substrate 34 are arranged in a space sandwiched, in the up-down direction, by the side plate sections 31B and 31C of the holding member 31 (see Fig. 4). The holding member 33 is arranged on the front side with respect to the display element 32C of the generation part 32. As shown in Fig. 4, the holding member 33 holds the generation part 32 on the holding member 31 by nipping the generation part the holding member 33 and the plygonal tube section 31A of the holding member 31. The control substrate 34 is connected to the front side of the holding member 33. The control substrate 34 is held by the holding member 31 via the holding member 33. The control substrate 34 is connected to the display element 32C through a not-shown flexible printed substrate (hereinafter, referred to as an "FPC"). The control substrate 34 is connected to a not-shown communication line. The control substrate 34 receives an image signal transmitted from a not-shown external device through the communication line. The control substrate 34 causes the display surface of the display element 32C to display an image by outputting a control signal to the display element 32C through the FPC.

The displacement mechanism 35 is provided on the front side with respect to the control substrate 34. The displacement mechanism 35 has a cylindrical section 35A and a plate-shaped section 35B. The plate-shaped section 35B is provided over front ends of the side plate sections 31B and 31C of the holding member 31. The plate-shaped section 35B has a rectangular plate shape. Each surface of the plate-shaped section 35B face in the front-rear direction. The plate-shape section35B is held by the side plate sections 31B and 31C of the holding member 31 with screws 350. The cylindrical section 35A extends frontward from a substantially center part of the front surface of the plate-shaped section 35B. The shape of the cylindrical section 35A is cylindrical. The cylindrical section 35A has a groove 351 on an outer circumferential surface thereof. The groove 351 extends helically. The groove 351 extends rearward with rotating clockwise in the front view.

Hereinafter, when the description is given regarding a rotation direction, the rotation direction (clockwise or counterclockwise) will be defined based on a case where the HMD 1 is viewed from the front side unless particular limitations are introduced.

### < Restricting Part 5 >

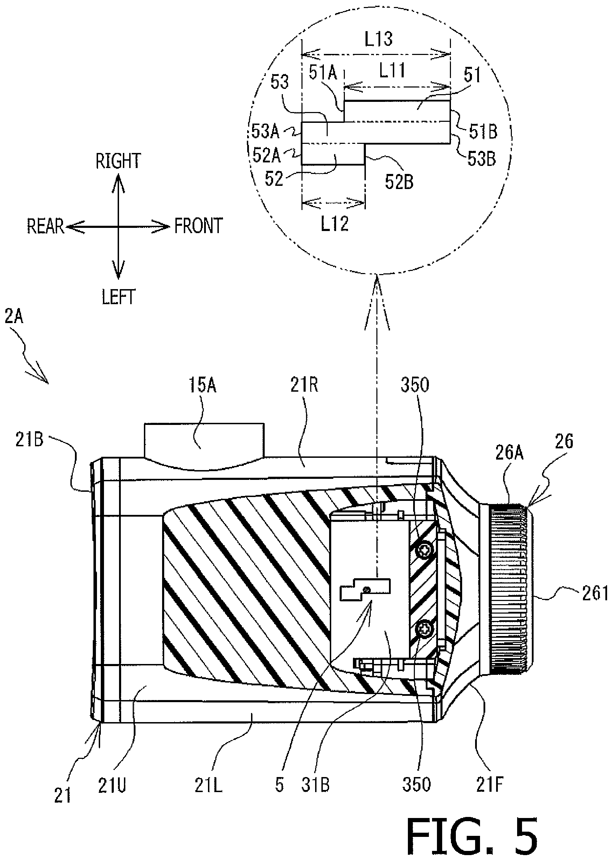

A restricting part 5 is provided on the side plate section 31B of the holding member 31. The restricting part 5 is a groove piecing the side plate section 31B in the up-down direction. As shown in Fig. 5, the restricting part 5 has a first groove 51, a second groove 52 and a connecting groove 53. The first groove 51, the second groove 52 and the connecting groove 53 extend in the front-rear direction, respectively. Lengths in the right-left direction (i.e., widths) of the first groove 51, the second groove 52 and the connecting groove 53 are the same. The connecting groove 53 is provided at a substantially central part in the right-left direction of the side plate section 31B. The first groove 51 is arranged on the right side with respect to the connecting groove 53, and the second groove 52 is arranged on the left side with respect to the connecting groove 53. Positions, in the right-left direction, of the first groove 51, the second groove 52 and the connecting groove 53 are different. The connecting groove 53 is arranged, in the right-left direction, between the first groove 51 and the second groove 52. The connecting groove 53 connects the first groove 51 and the second groove 52.

A part of a rear end of the first groove 51 and a part of a front end of the second groove 52 overlap in the front-rear direction. Therefore, a rear end 51A of the first groove 51 is arranged on the rear side with respect to a front end 52B of the second groove 52. Positions, in the front-rear direction, of a rear end 52A of the second groove 52 and a rear end 53A of the connecting groove 53 coincide with each other. Positions, in the front-rear direction, of a front end 51B of the first groove 51 and a front end 53B of the connecting groove 53 coincide with each other. The connecting groove 53 extends, in the front-rear direction, over the positions, in the front-rear direction, of the rear end 52A of the second groove 52 and the front end 51B of the first groove 51. A length L11 of the first groove 51 in the front-rear direction is longer than a length L12 of the second groove 52 in the front-rear direction.

The restricting part 5 is arranged in the neighborhood of a lower side of the protruding part 212 (see Fig. 3) provided to the upper wall part 21U of the casing 21. The right and left positions of the first groove 51 and the through hole 29A (see Fig. 3), the second groove 52 and the through hole 29B (see Fig. 3), and the connecting groove 53 and the through hole 29C (see Fig. 3) are the same, respectively.

### < Optical Part 4 >

As shown in Fig. 3, the optical part 4 is arranged on the rear side with respect to the generation mechanism 3. The optical part 4 allows the image light generated by the generation part 32 to pass therethrough from the front side to the rear side. The optical part 4 refracts the image light to converge. The optical part 4 has a polygonal tube section 41, and a plurality of lenses 42.

The polygonal tube section 41 is a substantially polygonal tube shaped member extending in the front-rear direction. A rear end of the polygonal tube section 41 is located in the neighborhood of and on the front side with respect to the opening 28 (see Fig. 2) formed on the rear wall part 21B of the third section 20C of the casing 21. Between the polygonal tube section 41 and the third section 20C, the transparent member 28A is nipped. As shown in Fig. 6, a part of a front side of the polygonal tube section 41 is fitted inside a part of the rear side of the polygonal tube section 31A of the generation mechanism 3. The polygonal tube sections 31A and 41 overlap in the front-rear direction, the polygonal tube section 31A of the generation mechanism 3 is slidably supported with respect to the polygonal tube section 41.

As shown in Fig. 3, the plurality of lenses 42 are fixed inside the polygonal tube section 41. The optical axes of the plurality of lenses 42 extend in the front-rear direction. The image light emitted rearward from the generation mechanism 3 enters from a front end of the polygonal tube section 41 of the optical part 4. Further, the image light passes through the plurality of lenses from the front side to the rear side. The image light is collected by the plurality of lenses 42. The image light is emitted rearward toward the opening 28 of the third section 20C from the rear end of the polygonal tube section 41.

At four corners of the front end of the polygonal tube section 41, protruding sections 411 protruding outward are provided. The protruding sections 411 respectively contact four corners of the rear end of the second section 20B of the casing 21 from inside. Not-shown screws are inserted in through holes respectively formed on the protruding sections 411 and engaged with the second section 20B of the casing 21. With this configuration, the optical part 4 are unmovably held with respect to the casing 21.

On the upper wall part of the polygonal tube section 41, two protruding parts 412 extending in the front-rear direction are provided. On the lower wall part of the polygonal tube section 41, not-shown two protruding parts having the same shapes as the two protruding parts 412 are provided. The two protruding parts 412 of the optical part 4 are fitted in two recesses 312 of the generation mechanism 3 (see Fig. 6). The two protruding parts on the lower wall part of the optical part 4 are fitted in two recesses on the lower wall part of the generation mechanism 3. As shown in Fig. 6, in accordance with a relative movement of the two protruding parts 412 of the optical part 4 along the recesses 312, and a relative movement of the two protruding parts on the lower wall part of the optical part along the two recesses on the lower wall part of the generation mechanism 3, the generation mechanism 3 is movable in the front-rear direction with respect to the optical part 4. It is noted that the optical part 4 is unmovably held with respect to the casing 21 as described above. Therefore, the generating mechanism 3 is movable with respect to the casing 21.

### < First Operation Mechanism 26 >

The first operation mechanism 26 is a mechanism configured to move the generation mechanism 3 with a rotatable dial. As shown in Fig. 3, the first operation mechanism 26 has a first operation part 26A, a protruding section 26B and two engaging sections 26C. The first operation part 26A is a cylindrical member with a jagged outer circumference. The center of the first operation part 26A extends in the front-rear direction. A front end of the first operation part 26A is closed with a disk-shaped blocking section 261. The protruding section 26B is a cylindrical member of which diameter is smaller than that of the first operation part 26A. The protruding section 26B extends rearward from a substantially center of a front surface of the blocking section 261 of the first operation part 26A. The two engaging sections 26C extend rearward from an upper part and a lower part of the protruding section 26B of the blocking section 261 of the first operation part 26A, respectively.

The first operation part 26A covers a front end of the front wall part 21F of the first section 20A of the casing 21 from outside. The two engaging sections 26C pass through the through hole 211 of the front wall part 21F rearward and engage with an inner surface of the front wall part 21F. The first operation mechanism 26 is supported so as to be rotatable, with respect to the front wall part 21F, about an axis extending in the front-rear direction. An O-ring 213 nipped between the first operation mechanism 26 and the front wall part 21F prevents water and/or dust from entering inside the casing 21 through a clearance between the first operation mechanism 26 and the front wall part 21F.

The protruding section 26B passes rearward through the through hole 211 of the front wall part 21F. As shown in Fig. 6, the inner circumferential surface of the protruding section 26B contacts, from outside, the outer circumferential surface of the cylindrical section 35A of the displacement mechanism 35. On the inner circumferential surface of the protruding section 26B, a not-shown protruding part protruding inward is provided. The protruding part is fitted in the groove 351 formed on the outer circumferential surface of the cylindrical section 35A. When the protruding part moves in accordance with rotation of the first operation mechanism 26, the groove 351 receives a frontward or rearward force from the protruding part. Since the generating mechanism 3 is movable in the front-rear direction, the displacement mechanism 35 moves the generation mechanism 3 to the front side or the rear side in accordance with the force the groove 351 receives from the protruding part.

A detailed description will be given. As shown in Fig. 6(A), when the first operation mechanism 26 rotates in a counterclockwise direction C1, the protruding part on the inner side of the protruding section 26B applies a force directed rearward to the groove 351. With this configuration, the displacement mechanism 35 moves the generation mechanism 3 in a rearward direction D1. Since the optical part 4 is unmovably arranged on the rear side of the generation mechanism 3, a distance between the generation part 32 and the optical part 4 decreases as the generation mechanism 3 moves in the rearward direction D1. On the other hand, as shown in Fig. 6(B), when the first operation mechanism 26 rotates in a clockwise direction C2, the protruding part on the inner side of the protruding section 26B applies a force directed frontward to the groove 351. With this configuration, the displacement mechanism 35 moves the generation mechanism 3 in a frontward direction D2. Since the optical part 4 is unmovably arranged on the rear side of the generation mechanism 3, a distance between the generation part 32 and the optical part 4 increases as the generation mechanism 3 moves in the frontward direction D2.

It is noted that, when the generation mechanism 3 moves in the front-rear direction, a spread angle of the image light which forms a virtual image to be visually recognized by the user is changed by the plurality of lenses 42 of the optical part 4. Accordingly, the user can perform the focus adjustment by performing an operation to rotate the first operation part 26A.

### < Second Operation Mechanism 27 >

The second operation mechanism 27 is a mechanism to switch movable ranges of the generation part 32 with a slidable knob. As shown in Fig. 3, the second operation mechanism 27 has a second operation part 27A and a protruding section 27B. The second operation part 27A is a substantially plate-shaped member elongated in the right-left direction. The second operation part 27A has a jagged part on an upper surface thereof. The protruding section 27B protrudes downward from a lower surface of the second operation part 27A. The protruded section 27B is cylindrical. A diameter of the protruding section 27B is slightly smaller than diameters of through holes 29A, 29B and 29C, which are formed on the upper wall part 21U of the casing 21.

The second operation part 27A is arranged above the protruding part 21 (see Fig. 2). The protruding section 27B is inserted through the through hole 29 from above. A lower end of the protruding section 27B protrudes downward from an inner surface of the upper wall part 21U, and is inserted inside one of the first groove 51, the second groove 52 and the third groove 53 of the restricting part 5. The protruding section 27B is supported so as to be movable in the right-left direction by the through hole 29A, 29B or 29C.

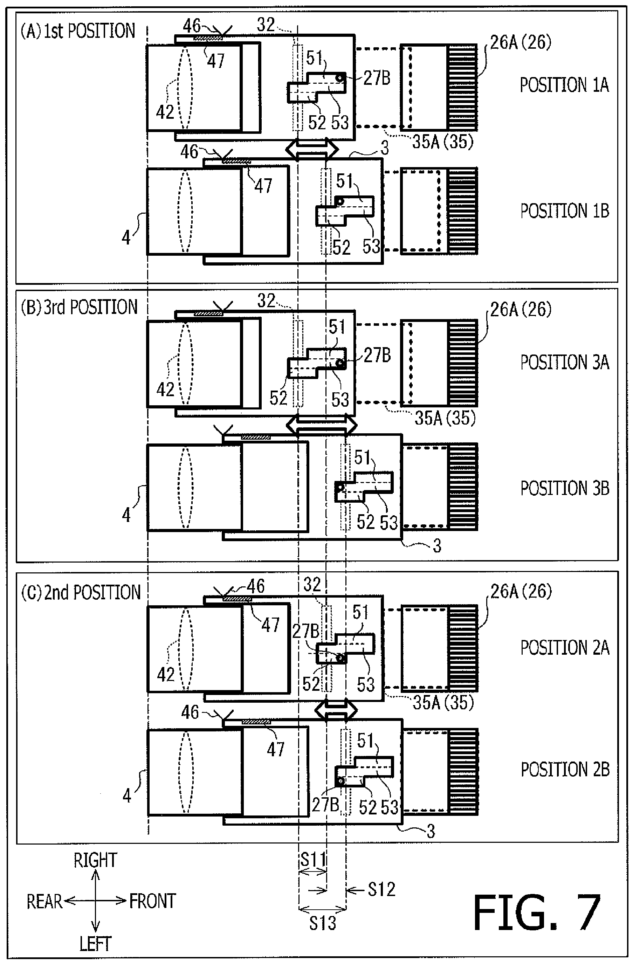

With the protruding section 27B being inserted in the through hole 29A, the lower end of the protruding section 27B can be inserted inside the first groove 51. Hereinafter, a position of the protruding section 27B in this state will be referred to as a "first position" (see Fig. 7(A)). With the protruding section 27B being inserted in the through hold 29B, the lower end of the protruding section 27B can be inserted inside the second groove 52. Hereinafter, a position of the protruding section 27B in this state will be referred to as a "second position" (see Fig. 7(C)). With the protruding section 27B being inserted in the through hole 29C, the lower end of the protruding section 27B can be inserted inside the connecting groove 53. Hereinafter, a position of the protruding section 27B in this state will be referred to as a "third position" (see Fig. 7(B)).

When an operation to move the second operation part 27A in the right-left direction is performed, the protruding section 27B is moved to one of the first position (see Fig. 7(A)), the second position (see Fig. 7(C)) and the third position (see Fig. 7(B)). For example, when an operation to move the second operation part 27A from the right end to the left end is performed, the protruding section 27B moves to the first position, the third position and the second position in this order.

### < Movement of Generation Mechanism 3 >

As shown in Fig. 7(A), when a rotating operation of the first operation part 26A is performed with the protruding section 27B being located at the first position, the generation mechanism 3 moves in the front-rear direction within a range where a relative movement of the protruding section 27B along the first groove 51 is allowed. With the generation mechanism 3 being moved to a rearmost position, the protruding section 27B contacts the front end 51B (see Fig. 5B) of the first groove 51. At this stage the generation mechanism 3 becomes closest to the optical part 4 within the range where the relative movement of the protruding section 27B along the first groove 51 is allowed. In the following description, the position of the generation mechanism 3 in the above state will be referred to as a "position 1A". When the generation mechanism 3 is moved to a frontmost position, the protruding section 27B contacts the rear end 51A (see Fig. 5) of the first groove 51. At this stage, the generation mechanism 3 is farthest from the optical part 4 within the range where the relative movement of the protruding section 27B along the first groove 51 is allowed. Hereinafter, the position of the generation mechanism 3 in this state will be referred to as a "position 1B". A movable range of the generation part 32 with the protruding section 27B being arranged at the first position, that is, a movable range of the generation part 32 when the generation mechanism 3 moves between the position 1A and the position 1B will be referred to as a first range, and written as S11. When a rotation operation of the first operation part 26A is performed, the first groove 51 restricts the movable range of the generation prat 32 within the first range S11.

As shown in Fig. 7(C), when the rotating operation of the first operation part 26A is performed with the protruding section 27B being located at the second position, the generation mechanism 3 moves in the front-rear direction within the range where the relative movement of the protruding section 27B along the second groove 52 is allowed. In a state where the generation mechanism 3 is moved to a rearmost position, the protruding section 27B contacts the front end 52B (see Fig. 5) of the second groove 52. In this state, the generation mechanism 3 becomes closest to the optical part 4 within a range where the relative movement of the protruding section 27B along the second groove 52 is allowed. Hereinafter, the position of the generation mechanism 3 in this state will be referred to as a "position 2A". In a state where the generation mechanism 3 is located at a frontmost position, the protruding section 27B contacts the rear end 52A (see Fig. 5) of the second groove 52. At this stage, the generation mechanism 3 is located farthest from the optical part 4 within the range where the relative movement of the protruding section 27B along the second groove 52 is allowed. Hereinafter, the position of the generation mechanism 3 in this state will be referred to as a "position 2B". A movable range of the generation part 3 in a state where the protruding section 27B is located at the second position, that is, a movable range of the generation part 32 when the generation mechanism 3 moves between the position 2A and the position 2B will be referred to as a "second range", and written as S12. When the rotating operation of the first operation part 26A is performed, the second groove 52 restricts the movable range of the generation part 32 within the second range S12.

As shown in Fig. 7(B), when the rotating operation of the first operation part 26A is performed with the protruding section 27B being located at the third position, the generation mechanism 3 is movable in the front-rear direction within the range where the relative movement of the protruding section 27B along the connecting groove 53 is allowed. In a state where the generation mechanism 3 is moved to a rearmost position, the protruding section 27B contacts the front end 53B (see Fig. 5) of the connecting groove 53. In this state, the generation mechanism 3 becomes closest to the optical part 4 within a range where the relative movement of the protruding section 27B along the connecting groove 53 is allowed. Hereinafter, the position of the generation mechanism 3 in this state will be referred to as a "position 3A". In a state where the generation mechanism 3 is located at a frontmost position, the protruding section 27B contacts the rear end 53A (see Fig. 5) of the connecting groove 53. At this stage, the generation mechanism 3 is located farthest from the optical part 4 within the range where the relative movement of the protruding section 27B along the connecting groove 53 is allowed. Hereinafter, the position of the generation mechanism 3 in this state will be referred to as a "position 3B". A movable range of the generation part 32 in a state where the protruding section 27B is located at the third position, that is, a movable range of the generation part 32 when the generation mechanism 3 moves between the position 3A and the position 3B will be referred to as a "third range", and written as S13. When the rotating operation of the first operation part 26A is performed, the connecting groove 53 restricts the movable range of the generation part 32 within the third range S13.

The first range S11, the second range S12 and the third range S13 respectively correspond to a length L11 of the first groove 51 (see Fig. 5), a length L12 of the second groove 52 (see Fig. 5), and a length L13 of the connecting groove 53 (see Fig. 5). The length L11 of the first groove 51 is longer than the length L12 of the second groove 52 (see Fig. 5). Therefore, a length in the front-rear direction is longer in the first range S11 than in the second range S12.

The first range S11 is arranged on the rear side with respect to the second range S12. Therefore, the first range S11 is closer to the optical part 4 than the second range S12. A rear end of the first range S11, or an end of the first range S11 closer to the optical part 4 is closer to the optical part 4 than a rear end of the second range S 12, or an end of the second range S12 closer to the optical part 4. A front end of the second range S12, or the end of the second range S12 farther from the optical part 4 is farther from the optical part 4 than a front end of the first range S11, or an end of the first range S11 farther from the optical part 4. An end of the first range S11 farther from the optical part 4 coincide with an end of the second range S12 closer to the optical part 4. An end of the second range S12 farther from the optical part 4 coincides with a front end of the third range S13, or an end of the third range S13 farther from the optical part 4. An end of the first range closer to the optical part 4 and a rear end of the third range S13, or an end of the third range closer to the optical part 4 coincide with each other.

### < Plate Spring 46 and Jagged Part 47 >

As shown in Fig. 3, on an inner surface of the right wall part 21R (see Fig. 1) of the casing 21, and on the right side of the polygonal tube section 41 of the optical part 4, a plate spring 46 is provided. The plate spring 46 has a rectangular shape elongated in the front-rear direction. The plate spring 46 is bent at a protruding section 46A at a central part in the front-rear direction thereof. The protruding section 46A protrudes leftward with respect to the front and rear ends of the plate spring 46. As shown in Fig. 7, a jagged part 47 is provided in the neighborhood of a rear end of the outer surface of the right wall part of the polygonal tube section 41 (see Fig. 3) of the optical part 4. The jagged part 47 has a plurality of recesses and a plurality of protrusions extending in the front-rear direction. The plurality of recesses and the plurality of protrusions of the jagged part 47 are arranged alternately in the front-rear direction.

As shown in Fig. 7(A), with the generation mechanism 3 being arranged at the position 1A, the protruding section 46A of the plate spring 46 (see Fig. 3) contacts a front end of the jagged part 47 from the right. With the generation mechanism 3 being arranged at the position 1B, the protruding section 46A of the plate spring 46 contacts a rear end of the jagged part 47 from the right. That is, a length of the jagged part 47 in the front-rear direction is adjusted such that the jagged part 47 can be brought into contact with the protruding section 46A of the plate spring 46 when the generation mechanism 3 moves between the position 1A and the position 1B.

In the process of the generation mechanism 3 moving in the front-rear direction between the position 1A and the position 1B, a state where the protruding section 46A of the plate 46 engages with one of the plurality of recesses of the jagged part 47 changes to a state where the protruding section 46 of the plate spring 46 engages with another recess which is an adjacent one of the plurality of recesses of the jagged part 47. The movement of the generation mechanism 3 in the front-rear direction is suppressed with the protruding section 46A of the plate spring 46 being engaged with the plurality of recesses of the jagged part 47, thereby the location of the generation mechanism 3 being stabilized. Accordingly, the plate spring 46 and the jagged part 47 provides a click feel to the rotating operation of the first operation part 26A to move the generation part 32 within the first range S11.

On the other hand, when the generation mechanism 3 moves in the front-rear direction between the position 2A and the position 2B as shown in Fig. 7(C), the protruding section 46A of the plate spring 46 contacts a rear side of the outer surface of the right wall part of the polygonal tube section 41 of the generation mechanism 3 with respect to the rear end of the jagged part 47. In a process of the generation mechanism 3 moving in the front-rear direction between the position 2A and the position 2B, the plate spring 46 does not contact the jagged part 47. Accordingly, the plate spring 46 and the jagged part 47 does not provide the click feel to the rotating operation of the first operation part 26A to move the generation part 32 within the second range S12, and the first operation part 26A rotates smoothly.

### < Main Functions and Effects of First Embodiment >

When the operation to rotate the first operation part 26A in the HMD 1 is performed, the display device 2A performs the focus adjustment by moving the generation part 32 with respect to the optical part 4. Further, the display device 2A restricts the movable range of the generation part 32 in accordance with the rotating operation of the first operation part 26A with the restricting part 5. Therefore, the user can perform the focus adjustment easily. Incidentally, the optical part 4 is unmovably held by the casing 21, and the position of the optical part 4 with respect to the casing 21 is unchanged even when the focus adjustment is performed. Therefore, an eye point of the display device 2A is unchanged even if the focus adjustment is performed. As above, the display device 2A facilitates the focus adjustment by restricting the movable range of the generation part 32 with the restricting part 5, and suppresses displacement of the eye point due to the focus adjustment.

The restricting part 5 restricts the movable range of the generation part 32 within the first range S11 (see Fig. 7(A)) in a state where the protruding section 27B of the second operation mechanism 27 being located at the first position. The restricting part 5 restricts the movable range of the generation part 32 within the second range S12 (see Fig. 7(C)) in a state where the protruding section 27B is located at the second position. It is noted that the generation part 32 which moves within the fisrt range S11 is closer to the optical part 4 than the generation part 32 which moves within the second range S12 (see Fig. 7). In this case, a changing amount of the focal distance due to a slight movement of the generation part 32 is larger in a case where the generation part 32 moves within the second range S12 than in a case where the generation part 32 moves within the first range S11. Accordingly, the user need to operate the first operation part 26A delicately to perform the focus adjustment in a case where the generation part 32 is moved within the second range S12.

As a countermeasure against the above, in the display device 2A, the first range S11 is made longer than the second range S12 (S11 > S12). That is, the restricting part 5 is configured such that the second range S12 is made shorter to make the movable length of the generation part 32 in this range relatively shorter. That is, since the range in which the delicate operation of the focus adjustment is required is made short, the user can perform the focus adjustment in this range easily. Accordingly, even when the focal length varies largely by the slight movement of the generation part 32, the user can perform the operation of the focus adjustment accurately.

In the display device 2A, the generation part 32 can be moved within the first range S11 or the second range S12 by relatively moving the protruding section 27B along the first groove 51 or the second groove 52. Further, the restricting part 5 has the connecting groove 53. The user can easily switch between the state where the movement of the generation part 32 is restricted within the first range S11 and the state where the movement of the generation part 32 is restricted within the second range S12 by causing the protruding section 27B to pass through the connecting groove 53. For example, by performing an operation to move the second operation part 27A leftward in a state where the protruding section 27B is located at the first position (see Fig. 7(A)), to the user can move the protruding section 27B to the second position via the third position. So is the case where the protruding section 27B is moved from the second position to the first position.

The first range S11 and the second range S12 are continuous in the front-rear direction. Therefore, between the states where the protruding section 27B is located at the first position and where the protruding section 27B is located at the second position, the movable ranges of the generation part 32 are continuous in the front-rear direction. Therefore, by operating the second operation part 27A to switch the location of the protruding section 27B to the first position or the second position, the user can perform the focus adjustment by moving the generation part 32 seamlessly over the first range S11 and the second range S12.

Further, the third range S13 within which the generation part 32 is movable in the state where the protruding section 27B is located at the third position (see Fig. 7(C)) includes the first range S11 and the second range S12. Therefore, by operating the second operation part 27A to locate the protruding section 27B at the third position, the user can perform the focus adjustment by moving the generation part 32 over the entire range including the first range S11 and the second range S12.

Additionally, the connecting groove 53 is arranged between the first groove 51 and the second groove 52, and the protruding section 27B passes the third position when moving from the first position to the second position. Therefore, for example, when the user performs an operation to move the second operation part 27A leftward to move the protruding section 27B from the first position to the second position, even if the user mistakenly stops the protruding section 27B at the third position along the way, the generation part 32 is movable within the range including the first range S11 and the second range S12. In this case, since the movable range of the generation part 32 includes the second range S12, the user intending to move the generation part 32 within the second range S12 can continuously performs the focus adjustment without a feeling of strangeness.

In the display device 2A, the first operation part 26A and the second operation part 27A are arranged in the up-down direction (see Fig. 1). Accordingly, the user can operate the second operation part 27A with a forefinger or a middle finger while operating the first operation part 26A with an annular finger at the same time, with gripping the casing 21 with the other fingers from above and below. Accordingly, the user can easily operate the first operation part 26A and the second operation part 27A at the same time.

Since the HMD 1 is used as worn on the head of the user, it is preferable that the casing 21 of the display device 2A is smaller. In association with downsizing of the casing 21, the movable range of the generation part 32 is shortened. Therefore, a minute operation is required for the focus adjustment which is performed by moving the generation part 32. As an example, a case were a sliding type operation part which directly transmits a user operation to the generation part 32 is used instead of the first operation part 26A will be described. In this case, since the generation part 32 moves by an amount equal to an operation amount of the operation part, it is difficult to perform an operation to minutely move the generation part 32. In contrast, the first operation mechanism 26 moves the generation part 32 in accordance with the rotation of the first operation part 26A. The rotating operation of the first operation part 26A by the user is converted into a reciprocating movement by a cam mechanism and transmitted to the generation part 32. The moving amount of the generation part 32 is smaller than the rotating amount of the first operation part 26A. Therefore, the user can perform a minute movement of the generation part 32 with the first operation part 26A, a minute focus adjustment can be realized.

When the generation part 32 moves within the first range S11, the click feeling is provided to the first operation part 26A. Accordingly, the user can easily operate the first operation partoperation part to be located at a desired position stepwisely. Incidentally, when the generation part 32 moves within the first range S11, the change of the focal length in association with the movement of the generation part 32 is relatively small. Therefore, even if the click feeling is provided to the first operation part 26A, the user can perform the focus adjustment appropriately. On the other hand, when the generation part 32 moves within the second range S12, the click feel is invalidated, and the first operation partoperation part 26A rotates smoothly. It is noted that, when the generation part 32 moves within the second range S12, only a slight movement of the generation part 32 changes the focal length largely. Therefore, by allowing the first operation part 26A to rotate smoothly in this range, the user can perform a minute rotating operation of the first operation part 26A, and therefore, can appropriately perform the focus adjustment.

### < Second Embodiment >

A second embodiment according to the present disclosures will be described. The second embodiment differs from the first embodiment in that the second embodiment employs a display device 2B instead of the display device 2A. In the following description, the configurations identical to those of the first embodiment are assigned with the same reference numbers, and descriptions thereof will be omitted.

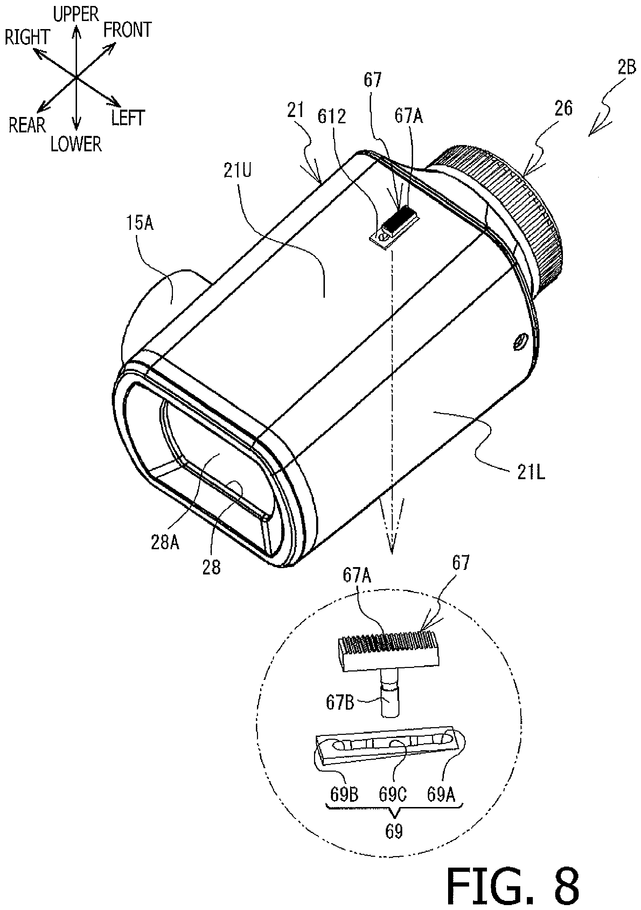

As shown in Fig. 8, on the upper wall part 21U of the casing 21, a protruding part 612 is provided. The protruding part 612 has a rectangular shape elongated in the front-rear direction in the top view. On an upper surface of the protruding part 612, a through hole 69 is formed. The through hole 69 has circular through holes 69A, 69B and 69C which are mutually connected at contiguous parts. The through holes 69A, 69B and 69C are aligned in a line in the front-rear direction. The through hole 69A is arranged on the frontmost side, while the through hole 69B is arranged on the rearmost side. The through hole 69C is arranged on the rear side with respect to the through hole 69A and on the front side with respect to the through hole 69B. A rear end of the through hole 69A and a front end of the through hole 69C are connected. A front end of the through hole 69B and a rear end of the through hole 69C are connected. The through hole 69 supports a second operation mechanism 67, which will be described later, so as to be movable in the front-rear direction.

### < Restricting Part 6 >

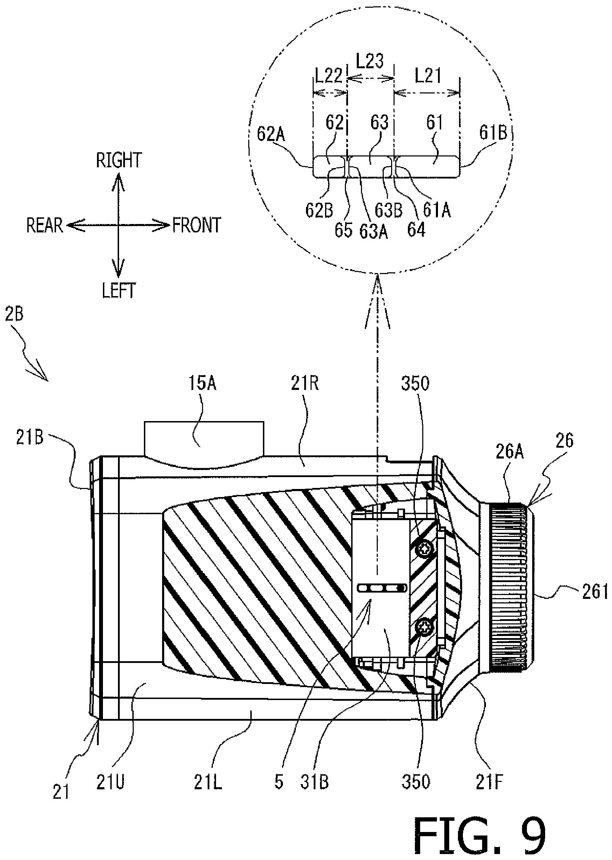

As shown in Fig. 9, a restricting part 6 is provided to the side plate section 31B of the holding member 31 of the generation mechanism 3 (see Fig. 3). The restricting part 6 is a groove piercing the side plate section 31B in the up-down direction. The restricting part 6 has a first groove 61, a second groove 62 and a connecting groove 63. Each of the first groove 61, the second groove 62 and the connecting groove 63 extends in the front-rear direction. The first groove 61, the second groove 62 and the connecting groove 63 are aligned in a line in the front-rear direction. The first groove 61 is arranged on the frontmost side, while the second groove 62 is arranged on the rearmost side. A front end 61B of the first groove 61 corresponds to a front end of the entire restricting part 6. A rear end 62A of the second groove 62 corresponds to a rear end of the entire restricting part 6. The connecting groove 63 connects a rear end 61A of the first groove 61 and a front end 62B of the second groove 62. Positions of the rear end 61A of the first groove 61 and a front end 63B of the connecting groove 63, and the front end 62B of the second groove 62 and a rear end 63A of the connecting groove 63 in the front-rear direction coincide, respectively. Lengths in the right-left direction (i.e., widths) of the first groove 61, the second groove 62, and the connecting groove 63 are the same. A length L21 in the front-rear direction of the first groove 61 is longer than a length L22 in the front-rear direction of the second groove 62. A length L23 in the front-rear direction of the connecting groove 63 is longer than the length L22 in the front-rear direction of the second groove 62, and shorter than the length L21 in the front-rear direction of the first groove 61.

The restricting part 6 is arranged in the neighborhood of a lower side of the protruding part 612 (see Fig. 8) provided on the upper wall part 21U of the casing 21. The first groove 61 is arranged below the through hole 69A (see Fig. 8). Below the through hole 69B (see Fig. 8), the second groove 62 is arranged. Below the through hole 69C (see Fig. 8), the connecting groove 63 is arranged.

Between a pair of inner walls, facing in the right-left direction, of the restricting part 6, at a position where the first groove 61 and the connecting groove 63 are connected, a restraining part 64 extends. The restraining part 64 is provided at the rear end 61A of the first groove 61 and the front end 63B of the connecting groove 63. Between the pair of inner walls, facing in the right-left direction, of the restricting part 6, at a position where the second groove 62 and the connecting groove 63 are connected, a restraining part 65 extends. The restraining part 65 is provided at a position of the front end 62B of the second groove 62 and the rear end 63A of the connecting groove 63. The restraining parts 64 and 65 extend in the right-left direction at a level below the center, in the up-down direction, of the inner walls of the restricting part 6. The restricting part 6 is not completely partitioned by the restraining parts 64 and 65, and the first groove 61, the second groove 62 and the connecting groove 63 communicate with each other through a space above the restraining parts 64 and 65.

### < Second Operation Mechanism 67 >

As shown in Fig. 8, the second operation mechanism 67 includes a second operation part 67A and a protruding section 67B. The second operation part 67A is a substantially plate-shaped member elongated in the front-rear direction. The second operation part 67A has a jagged part on an upper surface thereof. The protruding section 67B protrudes downward from a lower surface of the second operation part 67A. The protruding section 67B has a cylindrical shape. A diameter of the protruding section 67B is slightly smaller than those of the through holes 69A, 69B and 69C formed on the upper wall part 21U of the casing 21.

The second operation part 67A is arranged above the protruding part 612. The protruding section 67B is inserted in the through hole 69 from above. A lower end of the protruding section 67B protrudes downward from the inner surface of the upper wall part 21U, and inserted in one of the first groove 61, the second groove 62 and the connecting groove 63 of the restricting part 6. The protruding section 67B is supported so as to be movable, in the front-rear direction, over the through holes 69A, 69B and 69C.

The lower end of the protruding section 67B can be inserted inside the first groove 61 with the protruding section 67B being inserted through the through hole 69A. Hereinafter, the position of the protruding section 67B in this state will be referred to as a "fourth position". The lower end of the protruding section 67B can be inserted inside the second groove 62 with the protruding section 67B being inserted through the through hole 69B. Hereinafter, the position of the protruding section 67B in this state will be referred to as a "fifth position". The lower end of the protruding section 67B can be inserted inside the connecting groove 63 with the protruding section 67B being inserted through the through hole 69C. Hereinafter, the position of the protruding section 67B in this state will be referred to as a "sixth position".

For example, the user may slightly raise the second operation part 67A upward and move the lower end of the protruding section 67B on the upper side with respect to the restraining parts 64 and 65 of the restricting part 6 (see Fig. 9). In this state, the user may move the second operation part 67B in the front-rear direction to move the protruding section 67B between the fourth position and the sixth position. It is noted that the first groove 61, the second groove 62 and the connecting groove 63 communicate through the space above the restraining parts 64 and 65. Therefore, by the above operation, the user can easily move the protruding section 67B between the fourth position, the fifth position and the sixth position.

### < Movement of Generation Mechanism 3 >

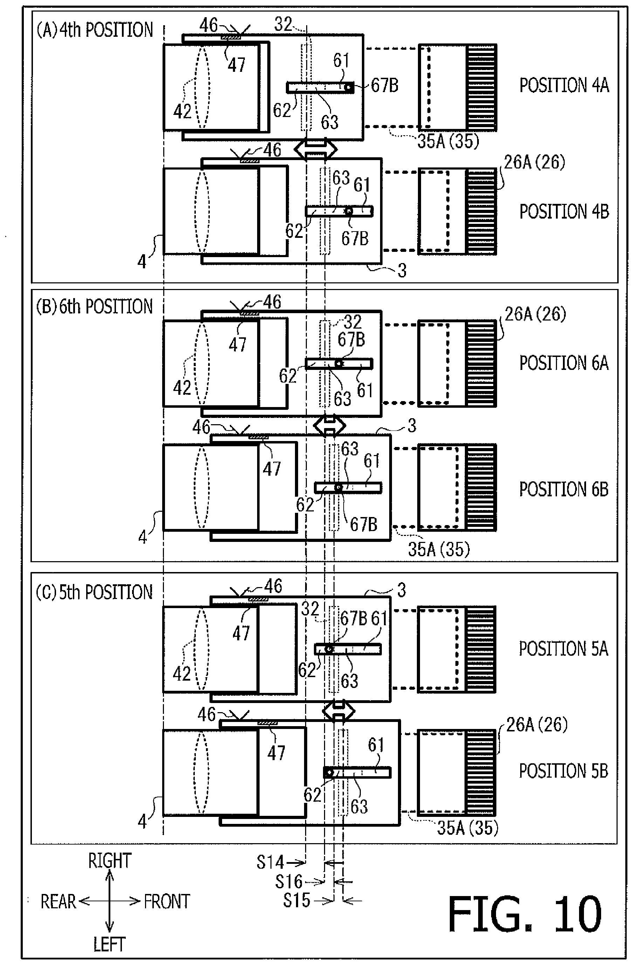

As shown in Fig. 10(A), when a rotating operation of the first operation part 26A is performed with the protruding section 67B being located at the fourth position, the generation mechanism 3 moves in the front-rear direction within a range where the protruding section 67B is relatively movable along the first groove 61. In a state where the generation mechanism 3 is moved to a rearmost side, the protruding section 67B contacts the front end 61B of the first groove 61 (see Fig. 9). At this stage, the generation mechanism 3 becomes closest to the optical part 4 within a range where the protruding section 67B is relatively movable along the first groove 61. Hereinafter, the position of the generation mechanism 3 in this state will be referred to as a "position 4A". In a state where the generation mechanism 3 is moved to a frontmost side, the protruding section 67B contacts the restraining part 64 (see Fig. 9) from the front side. At this stage, the generation mechanism 3 is farthest from the optical part 4 within a range where the protruding section 67B is relatively movable along the first groove 61. Hereinafter, the position of the generation mechanism 3 in this state will be referred to as a "position 4B". A movable range of the generation part 32 in a state where the protruding section 67B is located at the position 4B, that is, a movable range of the generation part 32 when the generation mechanism 3 moves between the position 4A and the position 4B will be referred to as a "fourth range" and indicated by S14. When the rotating operation of the first operation part 26A is performed, the first groove 61 restricts the movable range of the generation part 32 within the fourth range S14.

As shown in Fig. 10(B), when a rotating operation of the first operation part 26A is performed with the protruding section 67B being located at the sixth position, the generation mechanism 3 is movable in the front-rear direction within a range where the protruding section 67B is relatively movable along the connecting groove 63. In a state where the generation mechanism 3 is moved to a rearmost side, the protruding section 67B contacts the restraining part 64 (see Fig. 9) from the rear side. At this stage, the generation mechanism 3 is closest to the optical part 4 within a range where the protruding section 67B is relatively movable along the connecting groove 63. Hereinafter, the position of the generation mechanism 3 in this state will be referred to as a "position 6A". In a state where the generation mechanism 3 is moved to a frontmost side, the protruding section 67B contacts the restraining part 65 (see Fig. 9) from the front side. At this stage, the generation mechanism 3 is farthest from the optical part 4 within a range where the protruding section 67B is relatively movable along the connecting groove 63. Hereinafter, the position of the generation mechanism 3 in this state will be referred to as a "position 6B". A movable range of the generation part 32 in a state where the protruding section 67B is located at the sixth position, that is, a movable range of the generation part 32 when the generation mechanism 3 moves between the position 6A and the position 6B will be referred to as a "sixth range" and indicated by S16. When the rotating operation of the first operation part 26A is performed, the connecting groove 63 restricts the movable range of the generation part 32 within the sixth range S16.

As shown in Fig. 10(C), when a rotating operation of the first operation part 26A is performed with the protruding section 67B being located at the fifth position, the generation mechanism 3 moves in the front-rear direction within a range where the protruding section 67B is relatively movable along the second groove 62. In a state where the generation mechanism 3 is moved to a rearmost side, the protruding section 67B contacts the restraining part 65 (see Fig. 9) from the rear side. At this stage, the generation mechanism 3 becomes closest to the optical part 4 within a range where the protruding section 67B is relatively movable along the second groove 62. Hereinafter, the position of the generation mechanism 3 in this state will be referred to as a "position 5A". In a state where the generation mechanism 3 is moved to a frontmost side, the protruding section 67B contacts the rear end 62A of the second groove 62 (see Fig. 9). At this stage, the generation mechanism 3 is farthest from the optical part 4 within a range where the protruding section 67B is relatively movable along the second groove 62. Hereinafter, the position of the generation mechanism 3 in this state will be referred to as a "position 5B". A movable range of the generation part 32 in a state where the protruding section 67B is located at the position 5B, that is, a movable range of the generation part 32 when the generation mechanism 3 moves between the position 5A and the position 5B will be referred to as a "fifth range" and indicated by S15. When the rotating operation of the first operation part 26A is performed, the second groove 62 restricts the movable range of the generation part 32 within the fifth range S15.

The fourth range S14, the fifth range S15 and the sixth range S16 respectively correspond to the length L21 of the first groove 61 (see Fig. 9), the length L22 of the second groove 62 (see Fig. 9), and the length L23 of the connecting groove 63 (see Fig. 9). The length L21 of the first groove 61 is longer than the length L22 of the second groove 62 (see Fig. 9). Therefore, the length in the front-rear direction of the fourth range S14 is longer than the length in the front-rear direction of the fifth range S15.

A front end of the fourth range S14, or the position of an end of the fourth range S14 farther from the optical part 4 coincides with a rear end of the sixth range S16, or a position of an end of the sixth range closer to the optical part 4. A rear end of the fifth range S15, or a position of an end of the fifth range S15 closer to the optical part 4 coincides with a front end of the sixth range S16, or a position of an end of the sixth range S16 farther from the optical part 4.

### < Main Functions and Effects of Second Embodiment >

In addition to the functions and effects of the first embodiment, the second embodiment further has the following functions and effects. When the protruding section 67B of the second operation mechanism 67 is located at the fourth position, the fifth position and the sixth position, the restricting part 6 restricts the movable range of the generation part 32 within the fourth range S14 (see Fig. 10(A)), the fifth range S15 (see Fig. 10(C)), and the sixth range S16 (see Fig. 10(B)), respectively. The user can switch the movable ranges of the generation part 32 in the front-rear direction by performing an operation to move the second operation part 67A in the front-rear direction. That is, the moving direction of the second operation part 67A and the moving direction of the generation part 32 coincide with each other. Accordingly, the user can continuously switch among the states where the movable range of the generation part 32 is restricted within the fourth range S14, the fifth range S15, and the sixth range S16, intuitively and easily.

In the restricting part 6, the first groove 61 and the connecting groove 63 are partitioned by the restraining part 64. The second groove 62 and the connecting groove 63 are partitioned by the restraining part 65. The restraining parts 64 and 65 restrict the movable range of the generation part 32 within one of the fourth range S14, the fifth range S15 and the sixth range S16 by restraining the relative movement of the protruding section 67B, in the front-rear direction, along the restricting part 6. It is noted that each of the restraining parts 64 and 65 extends in the right-left direction within a part lower than the center, in the up-down direction, of an inner wall of the restricting part 6. That is, the restricting part 6 is not completely portioned by the restraining part 64 or 65, but the first groove 61, the second groove 62 and the connecting groove 63 communicate through a space above the restraining parts 64 and 65. Therefore, by slightly raising the second operation part 67A to move the lower end of the protruding section 67B to a position higher than the restraining parts 64 and 65, the user can easily move the protruding section 67B among the fourth position, the fifth position and the sixth position.

### < Modified Embodiment >

The present disclosures should not be limited to the above-described embodiments, but various modifications can be made. In the following description, modifications mainly based on the first embodiment will be illustrated and described. It is noted that the contents described hereinafter could be apply to the second embodiment as well according to need.

It is needless to say that the shapes of the first groove 51, the second groove 52 and the connecting groove 53 need not be limited to those of the above-described embodiment. For example, the first groove 51, the second groove 52 and the connecting groove 53 may extend in a direction inclined with respect to the front-rear direction. The first groove 51, the second groove 52 and the connecting groove 53 may be curved.

The length relationship among the length L11 of the first groove 51, the length L12 of the second groove 52 and the length L13 of the connecting groove 53, and the length relationship among the first range S11, the second range S12 and the third range S13 need not be limited to ones of the above-described embodiment. For example, the first range S11 and the second range S12 may have the same length, or the second range S12 may be longer than the first range S11. The length of the third range S13 may be shorter than the length of each of the first range S11 and the second range S12. The position of the end of the first range S11 farther from the optical part 4 may be farther from the optical part 4 than the position of the end of the third range S13 closer to the optical part 4. The position of the end of the second range S12 closer to the optical part 4 may be closer to the optical part 4 than the position of the end of the third range S13 farther from the optical part 4. That is, the first range S11 and the third range S13, and the second range S12 and the third range S13 may partially overlap in the front-rear direction.

The restricting part 5 may be provided on the upper wall part 21U of the casing 21. The protruding section 27B of the second operation mechanism 27 may be provided to be fixable to the side plate section 31B of the generation mechanism 3. When the protruding section 27B moves in association with the movement, in the front-rear direction, of the generation mechanism 3, the restricting part 5 provided to the casing 21 may restrict the movement of the generation mechanism 3 by restricting the movement of the protruding section 27B. The connecting groove 53 may not be included in the restricting part 5. The first groove 51 and the second groove 52 may be directly connected at portions overlapping in the front-rear direction. The connecting groove 63 may not be included in the restricting part 6. The rear end 61A of the first groove 61 and the front end 62B of the second groove 62 may be directly connected.

The rear end 51A of the first groove 51 may be arranged on the front side with respect to the front end 52B of the second groove 52. That is, the first groove 51 and the second groove 52 may not overlap in the front-rear direction. In such a case, the connecting groove 53 may extend in a direction crossing with the front-rear direction (e.g., the right-left direction) so as to be capable of connecting the rear end 51A of the first groove 51 and the front end 52B of the second groove 52.

The rear end 53A of the connecting groove 53 may be arranged at a position closer to or farther from the optical part 4 than the rear end 52A of the second groove 52. The front end 53B of the connecting groove 53 may be arranged at a position closer to or farther from the optical part 4 than the front end 51B of the first groove 51. The lengths L11, L12 and L13 of the first groove 51, the second groove 52 and the connecting groove 53, respectively, may be different from each other. The restricting part 5 may restrict the movement of the generation mechanism 3 in the front-rear direction in three steps, the moveable ranges of the three steps being different from each other.

The restricting part 6 may have protruding parts which protrude inward from the inner walls of the restricting part 6 instead of the restraining parts 64 and 65. Concretely, the restricting part 6 may be configured as follows. The protruding parts may be provided on the inner walls facing in the front-rear direction at a boundary between the first groove 61 and the connecting groove 63, and a boundary between the second groove 62 and the connecting groove 63. That is, the width, in the right-left direction, of the restricting part 6 may be narrowed at poortions where the protruding parts are provided. When the protruding section 67B of the second operation mechanism 67 relatively moves along the restricting part 6, the protruding parts may restrict the protruding section 67B from relatively moving between the first groove 61 and the connecting groove 63, and restrict the protruding section 67B from relatively moving between the second groove 62 and the connecting groove 63.

The HMD 1 need not be limited to the video transmission type device, but may be an optical transmission type device. The display device 2A may have a half mirror on the outer side of the opening 28 of the casing 21. The mounting fixture 11 and the connection fixture 12 may hold the display device 2A in a state where the opening 28 thereof faces the left side and the right wall part 21R thereof faces the front side. In such a case, the half mirror provided on the outer side of the opening 28 may be arranged in front of the eye of the user. The image light generated by the generation mechanism 3 may be emitted leftward through the opening 28. The half mirror may reflect the emitted image light toward the user, and, at the same time, allow light of a scenery in front of the eye to pass through to proceed toward the user. With this configuration, the HMD 1 may make the user to visually recognize the scenery in front of the eye of the user and the image in a superimposed manner. It is noted that a total reflection mirror may be provided instead of the half mirror.

Even if the HMD 1 is used as described above, the first operation part 26A is held by the front wall part 21F of the side wall part of the casing 21, and the second operation part 27A is held by the upper wall part 21U of the casing. In this case, the user the can operate the second operation part 27A with a forefinger or a middle finger while operating the first operation part 26A with an annular finger at the same time, with gripping the casing 21 with the other fingers from above and below. When the HMD 1 is used as the optical transmission type device as described above, the first operation part 26A may be provided to the right wall part 21R which is to be arranged on the front side. In such a case, the first operation part 26A and the second operation part 27A are aligned in the right-left direction. Further, the ball joint 15 may be provided to the front wall part 21F which is to be arranged on the right side.

The first operation mechanism 26 may directly move the generation mechanism 3 in the front-rear direction by moving the first operation part 26A in the front-rear direction. That is, the first operation part 26A may be of a sliding type. In such a case, the first operation part 26A may be directly connected to the generation mechanism 3.

A rotation torque of the first operation part 26A may be changed between a case where the generation mechanism 3 is moved within the first range S11 and a case where the generation mechanism 3 is moved within the second range S12. Alternatively, a moving amount of the generation mechanism 3 when the first operation part 26A is rotated by a predetermined amount is differentiated between a case where the generation mechanism 3 moves within the first range S11 and a case where the generation mechanism 3 moves within the second range S12. For example, when the first operation part 26A is rotated by a predetermined amount, a moving amount of the generation mechanism 3 within the first range S11 may be made smaller than a moving amount of the generation mechanism 3 within the second range S12.

### < Others >

The plurality of lenses are an example of an "optical element" in the present disclosures. The front-rear direction is an example of a "first direction" in the present disclosures. The plate spring 46 or the jagged part 47 is an example of a mode changing means of the present disclosures.

### EXPLANATION OF REFERENCE SIGNS

- 1: : HMD
- 2A, 2B: : display device
- 3: : generation mechanism
- 4: : optical part
- 5, 6: : restricting part
- 21: : casing
- 26: : first operation mechanism
- 26A: : first operation part
- 27, 67: : second operation mechanism
- 27A, 67A: : second operation part
- 32: : generation part
- 35: : displacement mechanism
- 51, 61: : first groove
- 52, 62: : second groove
- 53, 63: : connecting groove
- 64, 65: : restraining part

## Claims

1. A head-mounted display, comprising:
a casing;
a generation part movably held inside the casing and configured to generate image light;
an optical part unmovably held inside the casing and having an optical element allowing the image light generated by the generation part to pass therethrough;
a displacement mechanism configured to move the generation part inside the casing;
a first operation part connected to the displacement mechanism and operating to move the generation part along a first direction parallel to an optical axis of the image light; and
a restricting part configured to restrict a movable range of the generation part.

2. The head-mounted display according to claim 1, wherein:
the restricting part is capable of switching between a case where the movable range is restricted within a first range and a case where the movable range is restricted within a second range;
a position of an end of the first range on the optical part side is closer to the optical part than a position of an end of the second range on the optical part side; and
in the first direction, a length of the first range is longer than a length of the second range.

3. The head-mounted display according to claim 2,
wherein the restricting part comprises:
a groove provided to one of the generation part and the casing and extending in a direction parallel to the first direction, the groove including:
a first groove configured to restrict the movable range within the first range;
a second groove configured to restrict the movable range within the second range; and
a connecting groove connecting the first groove and the second groove; and
a protruding section provided to the other of the generation part and the casing, the protruding section protruding toward the generation part, a part of the protruding section being insertable in the groove,
wherein, when the protruding section is inserted in the first groove, the movable range is restricted within the first range as the protruding section relatively moves along the first grove, and
wherein, when the protruding section is inserted in the second groove, the movable range is restricted within the second range as the protruding section relatively moves along the second groove.

4. The head-mounted display according to claim 3,
wherein the first groove, the second grove and the connecting groove are provided at different positions in a direction perpendicular to the first direction,
wherein a position of an end of the first groove on the optical part side is closer to the optical part than an end of the second groove opposite to the optical part side, and
wherein the connecting groove extends, in a direction parallel to the first direction, over an end of the first groove opposite to the optical part side and an end of the second groove on the optical part side, the connecting groove being arranged between the first groove and the second groove in the direction perpendicular to the first direction.

5. The head-mounted display according to claim 3,
wherein the first groove and the second groove are aligned in the first direction, and
wherein the connecting groove is configured to connect an end of the first groove on the optical part side and an end of the second groove on a side opposite to the optical part side.

6. The head-mounted display according to claim 5, wherein restraining parts configured to restrain movement of the protruding section are provided at connection portions between the first groove and the connecting groove, and between the second groove and the connecting groove.

7. The head-mounted display according to any one of claims 3 - 6,
further comprising a second operation part configured to operate the protruding section,
wherein the first operation part and the second operation part are arranged to align in a direction perpendicular to the first direction.

8. The head-mounted display according to any one of claims 2 - 7, wherein the first operation part comprises a rotatable dial.

9. The head-mounted display according to claim 8, further provided with a mode changing means configured to make the dial rotate:
in a first mode when the generation part moves within the second rage; and
in a second mode which is different from the first mode when the generation part moves within the first range.
